# EUROPEAN PATENT SPECIFICATION

(11) **EP 3 878 694 B1**
(45) Date of publication and mention of the grant of the patent: **03.07.2024**
(21) Application number: 21161942.4
(22) Date of filing: 11.03.2021
(51) Int. Cl.: B60R 5/04, B60R 21/02

(54) **DIVIDER ARRANGEMENT**
TEILERANORDNUNG
AGENCEMENT DE SÉPARATION

(30) Priority: 11.03.2020 GB 202003563
(43) Date of publication of application: 15.09.2021
(73) Proprietor: ASG Group Ltd, Derbyshire, Derby DE24 8PX (GB)
(72) Inventor: Mo, Christopher, Derby DE24 8PX (GB); Brown, Samuel, Derby DE24 8PX (GB)
(74) Representative: Swindell & Pearson Limited

(56) References cited:
- EP-A2- 0 825 071
- DE-A1- 19 624 378
- US-A1- 2003 090 118

## Description

### TECHNOLOGICAL FIELD

Examples of the present disclosure relate to a divider arrangement, and particularly but not exclusively a divider arrangement for dividing a load area of a vehicle. Some examples, though without prejudice to the foregoing, relate to a divider arrangement for a vehicle partition assembly for dividing a load area of a vehicle.

### BACKGROUND

Vehicle partition assemblies are used in vehicles (not least such as cars, vans and SUV's) to separate a load area of a vehicle from the remainder of the vehicle. For example, a partition member of a vehicle partition assembly transversely extends across an internal space of a vehicle, e.g. behind the vehicle's rear seats, to separate a rear luggage/cargo storage area (i.e. boot/trunk space) of a vehicle from a passenger area (i.e. seating area) of the vehicle.

A vehicle partition assembly may be typically used in a vehicle as a dog guard to enable one or more dogs or other animals to be safely carried in the vehicle's load area.

A vehicle partition assembly, in addition to having a partition member for (transversely) separating a load area from the rest of the vehicle, may also have one or more divider arrangements for (longitudinally) dividing the load area off by the partition member into two or more areas. Such (sub)division of the load area may be, for example, to: separate one or more dogs or other animals from each other, separate animals from luggage, or to otherwise divide the load area into separate sub-areas.

Conventional divider arrangements are not always optimal. Conventional divider arrangements may be difficult to install in a vehicle and attach to the vehicle's partition assembly. Conventional divider arrangements typically require upper bracing arrangements provided on a top section thereof for engaging with a roof of the load area in order to secure the divider arrangement in position. Such conventional divider arrangements may give rise to issues when installing in vehicles of varying roof heights and they may not be suitable for certain vehicles - such as those with a convertible roof/soft top roof, or certain roof shape profiles. Conventional divider arrangements may be bulky (i.e. having a large form factor being, e.g. being sufficiently high/tall so as to be able to engage with the roof of the load area) thereby giving rise to issues not least with regards to: manufacturing, weight, storing, packaging, shipping and transporting the divider arrangements.

US2003090118 relates to a vehicle security partition for use in vehicles to form a barrier between front and rear occupant areas. The security partition includes a front panel extending laterally within a rear occupant area of a vehicle. A side panel extends substantially perpendicular relative to the front panel within a rear occupant area.

DE19624378 A1 relates to a protective grill for fitting between passenger and luggage compartments. This discloses mountings of a partition that extend, and are detachable, from a frame of the partition, which are supported on upper and the lower sides of the grill and partially encompass a corresponding side. The sides of the partition frame running in a longitudinal direction of a vehicle each have a deformation area. The mounting supported on the lower side is adjustable and extends in a tubular section from a vertically, or approximately vertically, running side of the partition frame. The mounting is lockable to the frame, preferably secured by a knurled nut.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The present invention is set out by the independent claims.

According to at least some examples of the disclosure there is provided a divider arrangement for use in a vehicle partition assembly for dividing a load area of a vehicle, the divider arrangement comprising:
a divider member configured to be removably mountable to a partition member of a vehicle partition assembly, the divider member having a first major portion and a second minor portion, wherein the divider member is configured such that, in use when mounted to said partition member:
the first major portion of the divider member extends behind said partition member from a first side of said partition member in a first direction, and
the second minor portion of the divider member extends in front of said partition member in a second direction opposite to the first direction;

wherein the divider member comprises:
   a rear end, a front end, an upper end, a lower end,
   wherein the front end comprises a straight upper section, and an inclined lower section, and
   wherein the inclined lower section comprises the second minor portion;
a bracing arrangement, configured to be engageable with a floor of the load area, for supporting the divider member; and
wherein the second minor portion is configured to receive the bracing arrangement.

According to various, but not necessarily all, examples of the disclosure the divider arrangement further comprises the bracing arrangement.

According to various, but not necessarily all, examples of the disclosure the divider arrangement further comprises the elongate extension member.

According to various, but not necessarily all, examples of the disclosure there is provided a partition assembly comprising the divider arrangement as set out above and a partition member.

According to various, but not necessarily all, examples of the disclosure there are provided examples as claimed in the appended claims.

### BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:
FIG. 1 shows an isometric view of an example of a divider arrangement, in use with a vehicle partition assembly, according to the present disclosure;
FIG. 2 shows a side-on exploded view of the divider arrangement and vehicle partition assembly of FIG. 1;
FIG. 3 shows a close-up view of a front bracing member of the divider arrangement of FIG. 1;
FIG. 4 shows a close-up view of a rear bracing member of the divider arrangement of FIG. 1;
FIG. 5 shows a close-up rearwardly-facing view of the divider arrangement and the partition member of FIG. 1;
FIG. 6 shows a close-up front-facing view of the divider arrangement and the partition member of FIG. 1;
FIG. 7 shows a mounting arrangement for use with the divider arrangement; and
FIG. 8 shows examples of elongate extension members for use with the divider arrangement.

### DETAILED DESCRIPTION

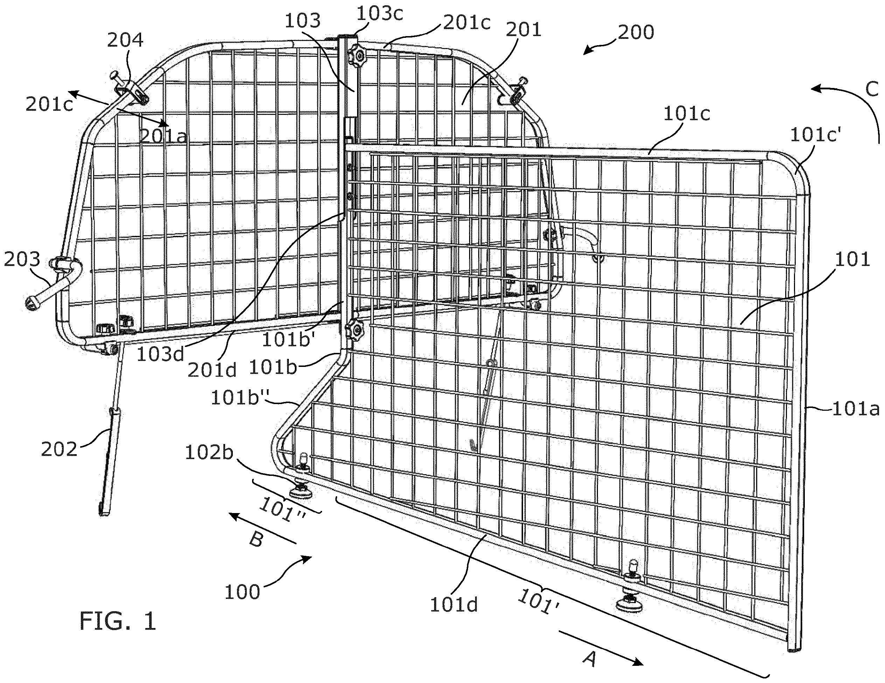

FIG. 1 illustrates a divider arrangement 100 for use in a vehicle partition assembly 200.

The vehicle partition assembly 200 comprises a partition member 201 (e.g. dog guard, cargo barrier or other equivalent structure). In use, when installed in a vehicle (not shown), the partition member 201 extends transversely across the vehicle (e.g. immediately behind the rear headrests above the top of the rear seats - not shown) thereby at least partially partitioning a load area (e.g. luggage space/boot/truck) of the vehicle from the remainder of the vehicle.

The partition member 201 can be mounted and secured into position in the vehicle by a number of different mounting and bracing arrangements 202, 203 and 204 (not least including the mounting arrangement described in GB2538938 granted in the name of ASG Group Limited). Such mounting and bracing arrangements for the partition member may form part of the vehicle partition assembly. As these arrangements do not form part of the present invention they will not be described herein.

The divider arrangement 100 is mountable to the partition member 201 of the vehicle partition assembly 200. The divider arrangement 100 comprises a divider member 101 (e.g. a vehicle rear luggage area divider) configured to be removably mountable to the partition member 201, and extend rearwardly therefrom to divide the load area into two portions.

The divider member 101 comprises a primary/first major portion 101' and a secondary/second minor portion 101" (i.e. smaller that the first portion). In use, when mounted to the partition member the first major portion of the divider member extends from a first side 201a of the partition member in a first direction A. The first direction A may, in use, be a rearwardly facing direction, i.e. along a longitudinal axis of the vehicle towards the rear thereof.

The first portion of the divider member may thereby extend into the load area and thereby at least partially divide the load area.

The second minor portion 101" of the divider member extends in a second direction B opposite to the first direction A. The second direction B may, in use, be a forward-facing direction, i.e. along a longitudinal axis of the vehicle towards the front thereof. The second portion 101" of the divider member is provided with a bracing arrangement 102b, e.g. foot assembly, for supporting the divider member. The bracing arrangement 102b engages with a floor (not shown) of the load area.

The divider member 101, when installed in use, has:
a rear/rearward end 101a, which is distal of the partition member 201 and in a direction towards a rear of the vehicle;
a front/forward end 101b, which is proximal to the partition member and in a direction towards a front of the vehicle;
an upper/top end 101c which is towards a roof (not shown) of the load area; and
a lower/bottom end 101d, which is towards a floor (not shown) of the load area.

The front end 101b of the divider member comprises a straight/flat upper section 101b' (which, as will be discussed below, is mounted to the partition member) and an inclined lower section 101b". The inclined lower front section of the divider member comprises the second portion 101" of the divider member.

At least a part of the second portion 101" of the divider member may be profiled/shaped so as to at least generally follow/conform to at least a part of a contour/shape of a back of a rear seat (not shown) of the vehicle.

The divider member 101 may be substantially planar and may define a dividing plane. The divider member and dividing plane may, in use, extend substantially longitudinally in a vehicle in direction parallel to vehicle's longitudinal axis. The partition member 201 may be substantially planar and define a partition plane. The partition member and partition plane may, in use, extend transversely in the vehicle in direction parallel to vehicle's transverse axis.

The first portion 101' of the divider member extends from the partition plane in the first direction A. The first direction, A, may extend longitudinally along the vehicle in direction parallel to vehicle's longitudinal axis. The first direction may extend rearwardly towards the rear/back of the vehicle

The second portion 101" of the divider member extends from the partition plane in the second direction B. The second direction, B, may extend forwards towards the front of the vehicle.

The first and second directions may be substantially perpendicular to the partition plane.

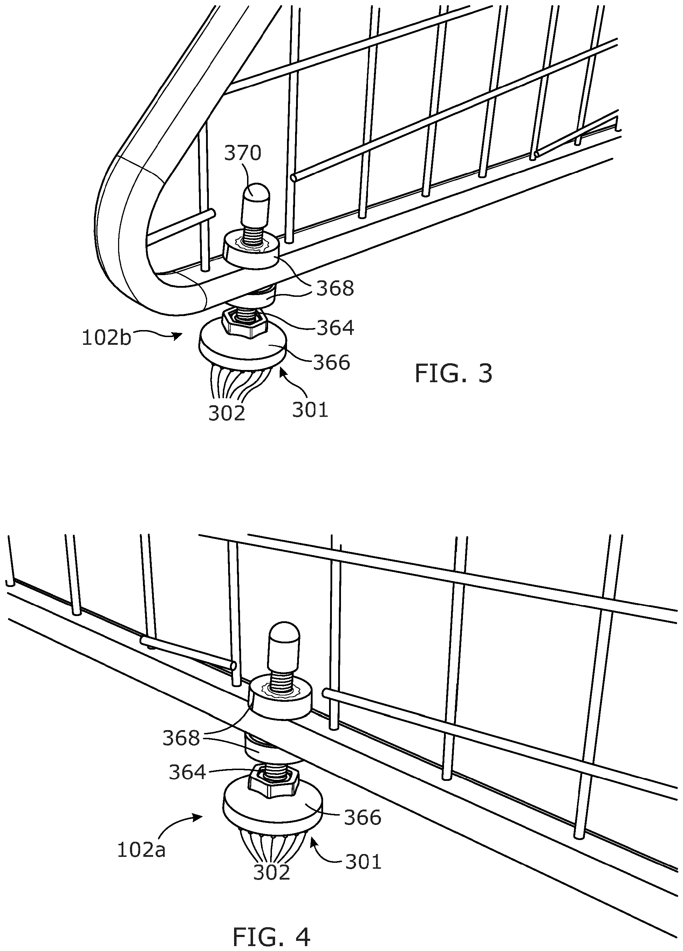

The bracing arrangement 102b is provided on the second portion 101 " of the divider member, at a lower side thereof, at a position which is in front of/forward of the partition plane - thereby defining a front bracing arrangement/front foot (as shown in FIG.3). A further bracing arrangement 102a is provided on the first portion 101' of the divider member, at a lower side thereof, at a position which is in behind/to the rear of the partition plane - thereby defining a rear bracing arrangement/rear foot (as shown in FIG. 4).

Advantageously, the inclined portion 101b" of the divider member defining the second portion 101" of the divider member (which, when the divider member is mounted to the partition member, is disposed at a position in front of the partition member/the partition plane), and the provision of the front bracing member 102b on the second portion 101" may inhibit pivoting/rotation of the divider member (for example, with respect to the viewpoint perspective FIG. 1, pivoting/rotation in an anti-clockwise direction about a pivot axis perpendicular to the divider member, e.g. a pivot axis defined by an intersection of the partition plane and the divider plane).

Advantageously, such a forwardly positioned bracing member that inhibits such pivoting and hence upwards movement/rotation of the upper distal end 101c' of the divider (shown in FIG. 1 via arrow C) may thereby avoid need for the provision of an upper bracing arrangement on the upper part 101c of the divider member to engage with a roof of the load space for inhibiting such anticlockwise rotation. Hence, in examples of the disclosure, the divider arrangement and divider member may be devoid of one or more bracing members at an upper part thereof. Examples of divider arrangements according the present disclosure may thereby be of particular advantage for use with vehicles with soft top roofs, i.e. convertibles or vehicles where the provision of an upper bracing arrangements to engage with a roof of the load area may be problematic. Examples of divider arrangements according the present disclosure may also be of particular advantage for use with vehicles having certain particular roof profile shapes or high roof heights/seat heights/floor heights where the provision of sufficiently tall/high divider with an upper bracing arrangement thereon to engage with a roof of the load area may be problematic.

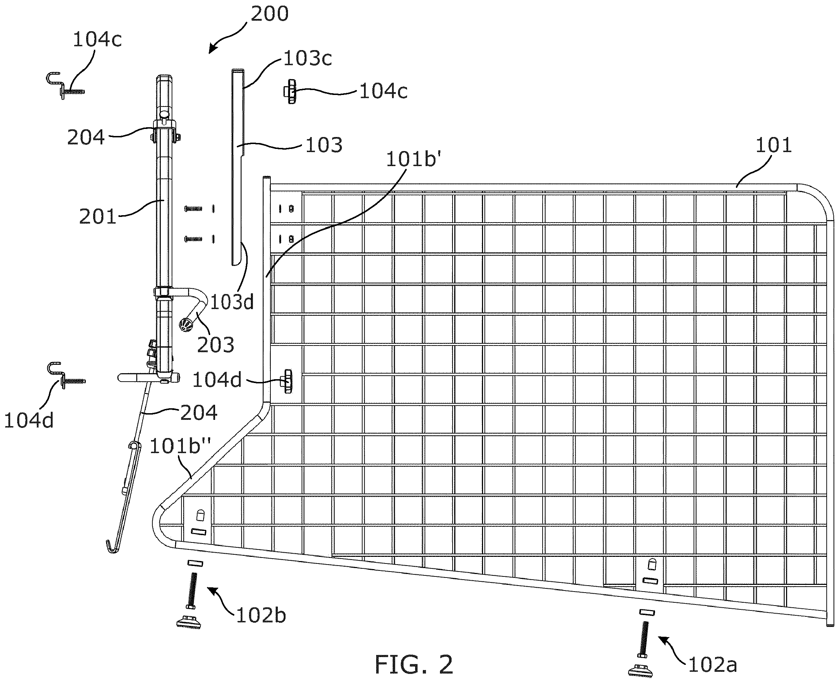

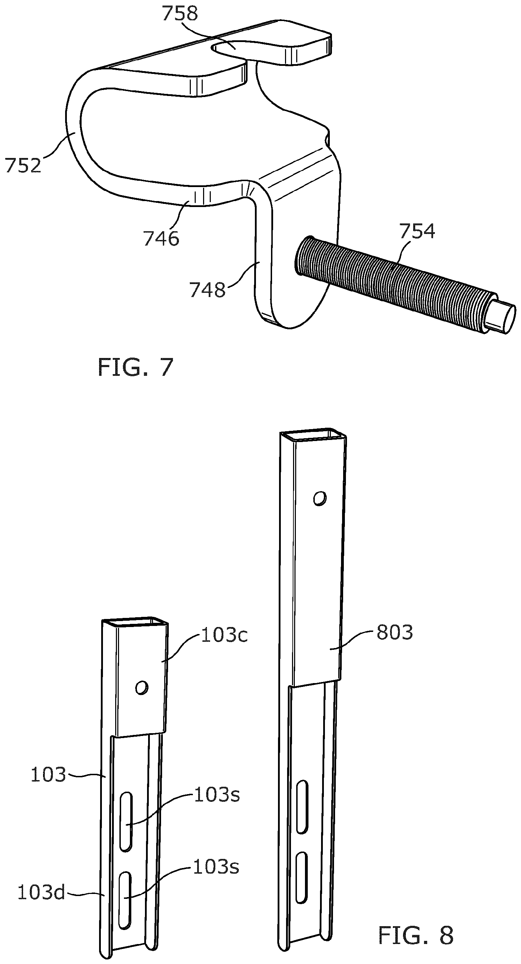

The divider arrangement 100 may further comprise an elongate extension member 103 (more clearly shown in the exploded view of FIG.2 and the examples of FIG. 8). A first/proximal end portion 103d of the extension member is removably attached to the divider member 101, e.g. at a distal/upper portion of the upper section 101b' of the divider member 101. The elongate extension member 103, when attached to the divider member 101, extends/projects therefrom.

A distal end portion 103c of the extension member is removably attached to the partition member 201.

A lower portion 201d of the partition member 201 is removable engaged to the divider member itself, i.e. at the straight upper front part 101b' of the divider member, i.e. so that the upper front part 101b' of the divider member is mounted to the lower portion 201d of the partition member. The distal end portion 103c of the elongate extension member 103 is mounted to an upper portion 201a of the partition member.

The divider arrangement comprises first 104c and second 104d mounting arrangements. The first mounting arrangement 104c is configured to releasably engage an upper portion 201c of the partition member 201 to the distal end portion 103c of the elongate extension member 103. The second mounting arrangement 104d is configured to releasably engage a lower portion 201d of the partition member 201 to the divider member 101 at a lower section of the straight front part 101 b' thereof. The first and second mounting arrangements may comprise any suitable fixing means, not least for example threaded fastening members, such as bolts and nuts, threaded rods and hand wheels.

The divider member 101 is configured to be adjustably mountable to the partition member 201, i.e. such that it is possible for the divider member to be mounted to the partition member at differing relative positions (e.g. heights), for example so as to accommodate differing floor and roof heights of a vehicle.

The length of the projection of the elongate extension member 103 from the divider member 101 may be adjustable. In some examples, the elongate extension member 103 may be provided with one or more elongate slots (as discussed below with respect to FIG. 8) and/or a plurality of though holes at differing positions along the length of the elongate extension member; such slots/multiple hole positions may enable the elongate extension member to be adjustably secured to the divider member so as to have varying projection lengths. In some examples, the elongate extension member may be telescopic and may comprise one or more telescopic mounting elements such that its length is variable. In other examples, a plurality of elongate extension members of differing (but fixed) length may be provided, such that an elongate extension member of an appropriate length for the installation/vehicle may be used.

Advantageously, the use of an elongate extension member for mounting the divider member to the partition member (wherein the elongate extension member is separate from, but releasably attachable to, the divider member) enables the divider member to have a lower height than may otherwise have been required were the divider member itself to be directly attached to both the upper 201c and lower 201d sections of the partition member201 to securely mount the divider member to the partition member. Since, in examples of the present disclosure, the divider member itself does not need to reach up to the top upper section 201c of the partition member when installed in a vehicle, advantageously, this enables the divider member to be smaller/reduced size/form factor than would otherwise be the case. Hence the divider member may require less raw materials in its manufacture, have less weight and be less bulky, which provides benefits not only in the manufacture of the divider members, but also benefits in the storage, packaging, shipping and installation of the divider members. Moreover, accommodating variable roof heights can be simply done by merely providing an elongate extension member of the appropriate length (or an adjustable elongate extension member whose length can be varied to the appropriate length) cf. needing to provide a whole divider member of the appropriate height.

In some examples, the elongate extension member is optional, and the divider member is directly attached to both the upper 201c and lower 201d sections of the partition member 201, via upper and lower mounting members 104c and 104d, in order to securely mount the divider member to the partition member.

As shown in FIG. 1, the divider member 101 may include a mesh body and an outer frame. The partition member may likewise include a mesh body and an outer frame. The upper part 201c of the outer frame of the partition member may be profiled so as to substantially follow the contours of a roof of a vehicle. Areas of mesh may be omitted adjacent any of the mounting arrangements and/or bracing arrangements so as to facilitate user manipulation and tightening thereof.

FIG. 2 shows a side-on exploded view of the divider arrangement and vehicle partition assembly of FIG. 1.

FIG. 3 shows a close-up view of a front bracing arrangement 102b of the divider arrangement. Such a bracing arrangement may take the form of an adjustable foot assembly attached to the divider member, i.e. whose 'foot height'/extension amount can be adjusted to securely brace/support the divider in position. The bracing arrangement is configured to be engageable with a floor of the load area (not shown). The bracing arrangement may comprise a grip surface 301 for engaging with the floor of the load area. The bracing arrangement 102b comprises a threaded member 364 with an enlarged head 366. The enlarged head comprises the engaging face 301 which may comprise a plurality of spikes/protrusions 302 to facilitate engagement/gripping with the floor of the loading area. The provision of such spikes/protrusions may be particularly advantageous where the floor of the load area comprises a carpet/fabric material.

Threaded nuts/thumb nuts/thumb wheels 368, engageable on the threaded member 364, are provided on either side of the outer frame of the divider member to retain the threaded member 364 and hence the head 366 in a required position/extension amount. By manipulation of the threaded nuts 368, the amount of extension of the enlarged head and be adjusted to secure the enlarged head into position, i.e. so as to abut and engage with an adjacent surface, i.e. the floor of the load area. An end cap 370 is provided to close off the free end of the threaded member 364.

FIG. 4 shows a close-up view of a rear bracing arrangement 102a of the divider arrangement whose configuration and components are similar to the front bracing arrangement 102b of FIG. 3.

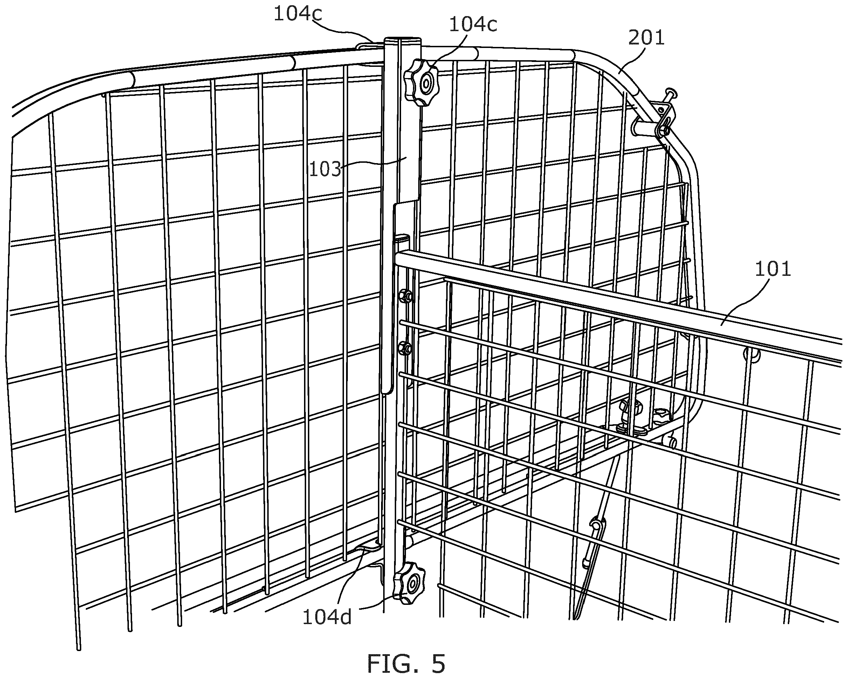

FIG. 5 shows a close-up rear-facing view of the divider arrangement and the partition member, as well as the upper and lower mounting members 104c and 104d for mounting the divider member to the partition member. Such mounting member comprising a male clamp bracket (shown in FIG.7) and a hand wheel.

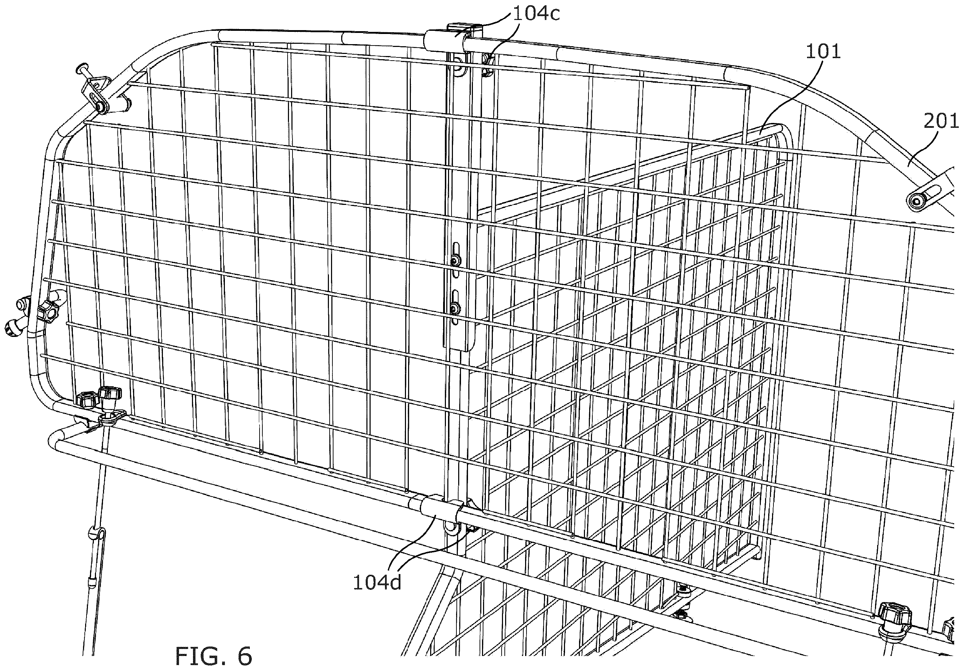

FIG. 6 shows a close-up front-facing view of the divider member 101 and the partition member 201 of FIG. 5.

FIG. 7 shows an example of a part of a mounting arrangement 104, namely a male clamp bracket, for use with the divider arrangement 100 (the other part, a hand wheel/thumb wheel, is not shown). The male clamp bracket comprises a bracket 746 with a lower web 748 with a threaded stud/shaft 754 projecting therefrom. The bracket 746 has a profiled part 752, that extends above the web 48, which has a deep C shape profile when viewed from the side for receiving an outer frame of the partition member 201.

In use, a first mounting arrangement, e.g. 104c, mounts the elongate extension member 103 to the partition member 201 (it being appreciated that, in use, the extension member is, itself, fixedly attached to the divider member and protruding therefrom). The C shaped part 752 can be hooked onto an upper part of the outer frame 201c of the partition member and a distal end of the threaded stud 754 is passed through a through hole of the elongate extension member (at an upper distal portion 103a thereof). The distal end of the threaded stud may then be fastened with a nut/hand wheel having an enlarged head so that it can be tightened by hand (such a hand wheel shown not least in FIGs. 1 and 2).

A second mounting arrangement 104d can be used to mount the divider member 101 to the partition member 201. Here the C shaped part 752 is hooked onto a lower part of the outer frame 201d of the partition member. A distal end of the threaded stud 754 is passed through a through hole of the divider member outer frame (at a lower portion of the flat section 101b' thereof immediately above the inclined section 101b"). The distal end of the threaded stud may then be fastened with a nut/hand wheel having an enlarged head.

In some examples, a set of a plurality of through holes at differing positions/heights in the divider member outer frame are provided for the second mounting arrangement 104d, i.e. for receiving the threaded stud of the mounting arrangement. Likewise, in some examples, multiple hole positions may also be provided for the first mounting arrangement 104c. Advantageously, such multiple hole positions for receiving a mounting arrangement provides adjustability with regards to the mounting of the divider member to the partition member, i.e. with regards to the position on the divider member at which the mounting arrangement mounts the partition member. This may enable an adjustment of amount by which the divider member extends from, e.g. extends below, the partition member so as to accommodate differing vehicle floor heights.

Alternatively (or in addition) in some examples, adjustability of the mounting, e.g. for accommodating differing vehicle floor heights, may be provided via the use of one or more elongate slots. In particular, the divider member outer frame may be provided with one or more elongate slots (not shown) such that the threaded fastener arrangement of the mounting arrangement 104d may engage with and secure the divider member at any position along the slot. Likewise, in some examples, one or more elongate slots may also be provided in the divider member outer frame (or the elongate extension member) for the first mounting arrangement 104c. Advantageously, such one or more slots for receiving a mounting arrangement provides adjustability with regards to the mounting of the divider member to the partition member, thereby enabling a variation of the position on the divider member at which the mounting arrangement mounts the partition member. This may enable an adjustment of amount by which the divider member extends from, e.g. extends below, the partition member so as to accommodate differing vehicle floor heights.

The provision of a male clamp bracket with a threaded stud may facilitate user installation since a user can firstly locate the male clamp bracket onto the (previously installed) partition member by passing the threaded stud through an opening/through hole of the outer frame of the partition member, and then adding the divider member to the threaded stud, i.e. by passing an opening/through hole of the outer frame of the divider member over the threaded stud and finally securing the end of the threaded stud with a hand wheel.

The profiled part 752 may further comprise a central recess 758 in its upper edge such that a strand of the mesh body of the partition member 101 may be received/located in the slot.

FIG. 8 shows two examples of elongate extension members 103, 803 of differing length. Each elongate extension member is attachable to the divider member (via any suitable fastening means, not least a threaded fastening arrangement such as nuts, bolts and washers as shown in FIG. 2) such that, when attached together, a distal end of the elongate extension member projects/extends from the divider member. The elongate extension member may take the form of a tube-like rigid structure or tube extension.

The elongate extension member may be configured such that an amount/length of the projection is adjustable. In this regard, the elongate extension member may be provided with one more elongate slots 103s such that the threaded fastener arrangement may engage with and secure the elongate extension member at any position along the slot so that the degree of projection of the elongate member may vary.

In some examples, rather than the divider member being attached to the lower section of the partition member and the elongate extension member (itself attached to the divider member) being attached to the upper section of the partition member, instead, in some examples the elongate extension member (itself attached to the divider member) is attached to both the upper and lower sections of the partition member. I.e. the partition member is indirectly attached/mounted to the partition member, namely via the elongate extension member. This may further reduce the size, weight and form factor of the divider member whilst still enabling its use for many different vehicles with differing floor/roof heights and profiles.

The divider arrangement 100 may be provided as a kit of parts, i.e. comprising: the divider member 101,
at least one bracing arrangement 102,
at least one elongate extension member 103, and
at least one mounting arrangement 104.

The divider arrangement 100 may be provided as part of the partition system 200, i.e. such that the partition system comprises:
the divider arrangement 100,
the partition member 201, and
one or more mounting means and bracing arrangements 202-204 for mounting and bracing the partition member to a vehicle.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not. Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of `at least one' or 'one or more' can be used to emphasise an inclusive meaning but the absence of these terms should not be taken to infer any exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

## Claims

1. A divider arrangement (100) for use in a vehicle partition assembly (200) for dividing a load area of a vehicle, the divider arrangement (100) comprising:
a divider member (101) configured to be removably mountable to a partition member (201) of a vehicle partition assembly (200), the divider member (101) having a first major portion (101') and a second minor portion (101"), wherein the divider member is configured such that, in use when mounted to said partition member:
the first major portion of the divider member extends behind said partition member from a first side of said partition member in a first direction, and
the second minor portion of the divider member extends in front of said partition member in a second direction opposite to the first direction,
wherein the divider member (101) comprises:
a rear end (101a), a front end (101b), an upper end (101c), a lower end (101d),
wherein the front end (101b) comprises a straight upper section (101b'), and an inclined lower section (101 b"), and
wherein the inclined lower section (101b") comprises the second minor portion (101 ");
a bracing arrangement (102b), configured to be engageable with a floor of the load area, for supporting the divider member (101); and
wherein the second minor portion (101") is configured to receive the bracing arrangement (102b).

2. The divider arrangement of any previous claim, wherein at least a part of the second minor portion of the divider member is profiled so as to at least generally follow at least a part of a contour of a back of a rear seat of a vehicle.

3. The divider arrangement of claim 2, wherein the bracing arrangement:
comprises an engaging face (301) comprising a plurality of protrusions (302); and/or
is configured to, in use when installed in a vehicle, inhibit the divider member pivoting.

4. The divider arrangement of any of previous claim, wherein the upper end of the divider member is devoid of any bracing arrangements.

5. The divider arrangement of any previous claim, further comprising an elongate extension member (103), wherein the elongate extension member is configured to be attachable to the divider member such that a distal end (103c) of the elongate extension member projects outwardly from the divider member.

6. The divider arrangement of claim 5, wherein the elongate extension member is attachable to the divider member such that a length of the projection is adjustable.

7. The divider arrangement of any of previous claims 5 to 6, wherein a proximal end portion (103d) of the elongate extension member is configured to be removably attached to the divider member, and wherein a distal end of the elongate extension member is configured to be removably attached to said partition member.

8. The divider arrangement of any of previous claims 5 to 7, wherein the divider member is configured to be mounted to a lower portion of said partition member and the distal end portion of the elongate extension member is configured to be mounted to an upper portion of said partition member.

9. The divider arrangement of any previous claim, wherein the divider member:
is configured to be adjustably mountable to said partition member; and/or
comprises a plurality of through holes and/or one or more elongate slots (103s) for receiving a mounting arrangement, said mounting arrangement being configured to releasably engage said partition member to the divider member.

10. The divider arrangement of any previous claim, further comprising first and second mounting arrangements (104c, 104d);
wherein the first mounting arrangement is configured to releasably engage said partition member to the elongate extension member; and
wherein the second mounting arrangement is configured to releasably engage said partition member to the divider member.

11. The divider arrangement of any previous claim, wherein the divider member is a vehicle rear luggage area divider and/or wherein said vehicle partition assembly is a dog guard.

12. The divider arrangement of any previous claim, wherein the load area of the vehicle is at least one selected from the group of: a rear luggage area of the vehicle, a rear cargo storage area of the vehicle, and a boot of the vehicle.

13. A partition assembly comprising:
said partition member; and
the divider arrangement of any previous claim.

## Patentansprüche

1. Trennwandanordnung (100) zur Verwendung in einer Fahrzeugunterteilungsanordnung (200) zum Abtrennen einer Ladefläche eines Fahrzeugs, wobei die Trennwandanordnung (100) Folgendes aufweist:
ein Trennelement (101), das so konfiguriert ist, dass es abnehmbar an einem Unterteilungselement (201) einer Fahrzeugunterteilungsanordnung (200) anbringbar ist, wobei das Trennelement (101) einen ersten Hauptabschnitt (101') und einen zweiten Nebenabschnitt (101") aufweist, wobei das Trennelement so konfiguriert ist, dass im Gebrauch, wenn es an dem Unterteilungselement angebracht ist
der erste Hauptabschnitt des Trennelements sich hinter dem Unterteilungselement von einer ersten Seite des Unterteilungselements in eine erste Richtung erstreckt, und
der zweite kleinere Abschnitt des Trennelements sich vor dem Unterteilungselement in einer zweiten Richtung entgegengesetzt zur ersten Richtung erstreckt,
wobei das Trennelement (101) aufweist:
ein hinteres Ende (101a), ein vorderes Ende (101b), ein oberes Ende (101c), ein unteres Ende (101d),
wobei das vordere Ende (101b) einen geraden oberen Abschnitt (101b') und einen geneigten unteren Abschnitt (101b") aufweist, und
wobei der geneigte untere Abschnitt (101b") den zweiten kleineren Abschnitt (101") aufweist;
eine Abstützanordnung (102b), die so konfiguriert ist, dass sie in Eingriff bringbar mit einem Boden des Ladebereichs ist, um das Abtrennelement (101) zu stützen; und
wobei der zweite kleinere Abschnitt (101") zur Aufnahme der Verstrebungsanordnung (102b) konfiguriert ist.

2. Trennwandanordnung nach einem der vorhergehenden Ansprüche, **dadurch gekennzeichnet, dass** zumindest ein Teil des zweiten kleineren Abschnitts des Trennelementes so profiliert ist, dass er zumindest im Allgemeinen zumindest einem Teil einer Kontur einer Rückenlehne eines Rücksitzes eines Fahrzeugs folgt.

3. Trennwandanordnung nach Anspruch 2, **dadurch gekennzeichnet, dass** die Abstützanordnung:
eine Eingriffsfläche (301) aufweist, die eine Vielzahl von Vorsprüngen (302) aufweist; und/oder
so konfiguriert ist, dass sie im Gebrauch, wenn sie in einem Fahrzeug installiert ist, das Trennelement am Schwenken hindert.

4. Trennwandanordnung nach einem der vorhergehenden Ansprüche, **dadurch gekennzeichnet, dass** das obere Ende des Trennelements keine Abstützanordnungen aufweist.

5. Trennwandanordnung nach einem der vorhergehenden Ansprüche, die ferner ein längliches Verlängerungselement (103) aufweist, **dadurch gekennzeichnet, dass** das längliche Verlängerungselement so konfiguriert ist, dass es an dem Trennelement angebracht werden kann, so dass ein distales Ende (103c) des länglichen Verlängerungselements von dem Trennelement nach außen vorsteht.

6. Trennwandanordnung nach Anspruch 5, **dadurch gekennzeichnet, dass** das längliche Verlängerungselement an dem Trennelement so anbringbar ist, dass eine Länge des Vorsprungs einstellbar ist.

7. Trennwandanordnung nach einem der vorhergehenden Ansprüche 5 bis 6, **dadurch gekennzeichnet, dass** ein proximaler Endabschnitt (103d) des länglichen Verlängerungselements so konfiguriert ist, dass er lösbar an dem Trennwandelement anbringbar ist, und dass ein distales Ende des länglichen Verlängerungselements so konfiguriert ist, dass es lösbar an dem Unterteilungselement angebracht ist.

8. Trennwandanordnung nach einem der vorhergehenden Ansprüche 5 bis 7, **dadurch gekennzeichnet, dass** das Trennelement so konfiguriert ist, dass es an einem unteren Abschnitt des Unterteilungselements angebracht wird, und dass der distale Endabschnitt des länglichen Verlängerungselements so konfiguriert ist, dass er an einem oberen Abschnitt des Unterteilungselements angebracht wird.

9. Trennwandanordnung nach einem der vorhergehenden Ansprüche, **dadurch gekennzeichnet, dass** das Trennelement:
konfiguriert ist, um verstellbar an dem Unterteilungselement anbringbar zu sein; und/oder
eine Vielzahl von Durchgangslöchern und/oder einen oder mehrere längliche Schlitze (103s) zur Aufnahme einer Trennwandanordnung aufweist, wobei die Trennwandanordnung konfiguriert ist, um das Unterteilungselement lösbar in Eingriff mit dem Trennwandelement zu bringen.

10. Trennwandanordnung nach einem der vorhergehenden Ansprüche, die ferner eine erste und eine zweite Befestigungsanordnung (104c, 104d) aufweist;
**dadurch gekennzeichnet, dass** die erste Befestigungsanordnung konfiguriert ist, um das Unterteilungselement lösbar mit dem langgestreckten Verlängerungselement in Eingriff zu bringen; und
wobei die zweite Befestigungsanordnung konfiguriert ist, um das Unterteilungselement lösbar mit dem Trennelement in Eingriff zu bringen.

11. Trennwandanordnung nach einem der vorhergehenden Ansprüche, **dadurch gekennzeichnet, dass** das Trennelement ein Fahrzeugheckgepäckraumtrenner ist und/oder dass die Fahrzeugunterteilungsanordnung ein Hundeschutz ist.

12. Trennwandanordnung nach einem der vorhergehenden Ansprüche, **dadurch gekennzeichnet, dass** der Ladebereich des Fahrzeuges mindestens einer ist, der ausgewählt ist aus der Gruppe von: einem hinteren Gepäckbereich des Fahrzeuges, einem hinteren Laderaum des Fahrzeuges und einem Kofferraum des Fahrzeuges.

13. Unterteilungsbaugruppe, die Folgendes aufweist:
das Unterteilungselement; und
die Trennwandanordnung nach einem der vorhergehenden Ansprüche.

## Revendications

1. Un agencement de séparation (100) destiné à être utilisé dans un ensemble (200) de partitionnement de véhicule pour diviser une zone de chargement d'un véhicule, l'agencement de séparation (100) comprenant :
un élément de séparation (101) conçu de façon à être montable de manière amovible sur un élément de partitionnement (201) d'un ensemble (200) de partitionnement de véhicule, l'élément de séparation (101) ayant une première partie principale (101') et une deuxième partie secondaire (101"), l'élément de séparation étant conçu de telle sorte que, en utilisation lorsqu'il est monté sur ledit élément de séparation :
la première partie principale de l'élément de séparation s'étend derrière ledit élément de partitionnement depuis un premier côté dudit élément de partitionnement dans une première direction, et
la deuxième partie secondaire de l'élément de séparation s'étend devant ledit élément de partitionnement dans une deuxième direction opposée à la première direction,
l'élément de séparation (101) comprenant :
une extrémité arrière (101a), une extrémité avant (101b), une extrémité supérieure (101c), une extrémité inférieure (101d),
l'extrémité avant (101b) comprenant une section supérieure droite (101b') et une section inférieure inclinée (101b"), et
la section inférieure inclinée (101b") comprenant la deuxième partie secondaire (101") ;
un agencement d'entretoisement (102b), conçu de façon à être apte à venir en engagement avec un plancher de la zone de chargement, afin de supporter l'élément de séparation (101) ; et
la deuxième partie secondaire (101") est conçue de façon à recevoir l'agencement d'entretoisement (102b).

2. L'agencement de séparation selon l'une quelconque des revendications précédentes, dans lequel au moins une partie de la deuxième partie secondaire de l'élément de séparation est profilée de manière à suivre au moins généralement au moins une partie d'un contour d'un dossier d'un siège arrière d'un véhicule.

3. L'agencement de séparation selon la revendication 2, dans lequel l'agencement d'entretoisement :
comprend une face d'engagement (301) comprenant une pluralité de saillies (302) ; et/ou
est conçu de façon à, lors de son utilisation alors qu'il est installé dans un véhicule, empêcher le pivotement de l'élément de séparation.

4. L'agencement de séparation selon l'une quelconque des revendications précédentes, dans lequel l'extrémité supérieure de l'élément de séparation est dépourvue de tout agencement d'entretoisement.

5. L'agencement de séparation selon l'une quelconque des revendications précédentes, comprenant en outre un élément d'extension allongé (103), l'élément d'extension allongé étant conçu de façon à pouvoir être fixé à l'élément de séparation de telle sorte qu'une extrémité distale (103c) de l'élément d'extension allongé fasse saillie vers l'extérieur depuis l'élément de séparation.

6. L'agencement de séparation selon la revendication 5, dans lequel l'élément d'extension allongé est apte à être fixé à l'élément de séparation de telle sorte qu'une longueur de la saillie soit réglable.

7. L'agencement de séparation selon l'une quelconque des revendications précédentes 5 à 6, dans lequel une partie d'extrémité proximale (103d) de l'élément d'extension allongé est conçue de façon à être fixée de manière amovible à l'élément de séparation, et dans lequel une extrémité distale de l'élément d'extension allongé est conçue de façon à être fixée de manière amovible audit élément de partitionnement.

8. L'agencement de séparation selon l'une quelconque des revendications précédentes 5 à 7, dans lequel l'élément de séparation est conçu de façon à être monté sur une partie inférieure dudit élément de partitionnement et la partie d'extrémité distale de l'élément d'extension allongé est conçue de façon à être montée sur une partie supérieure dudit élément de partitionnement.

9. L'agencement de séparation selon l'une quelconque des revendications précédentes, dans lequel l'élément de séparation :
est conçu de façon à pouvoir être monté de manière réglable sur ledit élément de partitionnement ; et/ou
comprend une pluralité de trous traversants et/ou une ou plusieurs fentes allongées (103s) pour recevoir un agencement de montage, ledit agencement de montage étant conçu de façon à mettre en engagement,
de façon libérable, ledit élément de partitionnement avec l'élément de séparation.

10. L'agencement de séparation selon l'une quelconque des revendications précédentes, comprenant en outre un premier et un deuxième agencement de montage (104c, 104d) ;
le premier agencement de montage étant conçu de façon à mettre en engagement de manière libérable ledit élément de partitionnement avec l'élément d'extension allongé ; et
le deuxième agencement de montage étant conçu de façon à mettre en engagement de manière libérable ledit élément de partitionnement avec l'élément de séparation.

11. L'agencement de séparation selon l'une quelconque des revendications précédentes, dans lequel l'élément de séparation est un séparateur de zone de bagages arrière de véhicule et/ou dans lequel ledit ensemble de partitionnement de véhicule est une grille pour chien.

12. L'agencement de séparation selon l'une quelconque des revendications précédentes, dans lequel la zone de chargement du véhicule est au moins une zone sélectionnée dans le groupe comprenant : une zone de bagages arrière du véhicule, une zone de stockage de fret arrière du véhicule et un coffre du véhicule.

13. Un ensemble de partitionnement comprenant :
ledit élément de partitionnement ; et
l'agencement de séparation selon une quelconque revendication précédente.
